# EUROPÄISCHE PATENTSCHRIFT

(11) **EP 2 345 021 B1**
(45) Veröffentlichungstag und Bekanntmachung des Hinweises auf die Patenterteilung: **08.08.2018**
(21) Anmeldenummer: 09782940.2
(22) Anmeldetag: 14.09.2009
(51) Int. Cl.: G08G 1/16, B60Q 1/52, G02B 27/01

(54) **VERFAHREN ZUR ANZEIGE EINES WARNHINWEISES IN EINEM FAHRZEUG**
METHOD FOR DISPLAYING A WARNING MESSAGE IN A VEHICLE
PROCÉDÉ D'AFFICHAGE D'UN INDICATEUR D'AVERTISSEMENT DANS UN VÉHICULE

(30) Priorität: 01.10.2008 DE 102008042539
(43) Veröffentlichungstag der Anmeldung: 20.07.2011
(73) Patentinhaber: Robert Bosch GmbH, 70442 Stuttgart (DE)
(72) Erfinder: YANG, Yiwen, 31141 Hildesheim (DE); BERSINER, Lutz, 31139 Hildesheim (DE); MUELLER-FRAHM, Mario, 30519 Hannover (DE); SELEM, Moez, 30171 Hannover (DE); VOGEL, Peter, 31139 Hildesheim (DE); BOER, Gerrit De, 31139 Hildesheim (DE); ENGELSBERG, Andreas, 31134 Hildesheim (DE); MODLER, Holger, 31139 Hildesheim (DE)
(86) Internationale Anmeldenummer: PCT/EP2009/061836
(87) Internationale Veröffentlichungsnummer: WO 2010/037625

(56) Entgegenhaltungen:
- EP-A1- 1 783 531
- WO-A1-03/005102
- DE-A1- 10 126 618
- DE-A1- 19 730 791
- DE-A1-102005 042 912
- DE-A1-102005 055 208

## Beschreibung

### Stand der Technik

Die Erfindung geht aus von einem Verfahren und einem Steuergerät nach Gattung der unabhängigen Ansprüche.

Bekannt sind Anzeigeeinheiten in Kraftfahrzeugen, welche Informationen für einen Fahrer eines Kraftfahrzeugs in einem Bereich einer Frontscheibe des Kraftfahrzeugs für den Fahrer sichtbar machen. Derartige Anzeigesysteme werden auch Head-Up-Display genannt.

Aus der EP 0 927 983 B1 ist eine Einrichtung zur Warnung eines Fahrers eines Kraftfahrzeugs bekannt, bei welcher unterschiedliche Kraftfahrzeuge, welche am Straßenverkehr teilnehmen, miteinander über jeweilige Kommunikationseinheiten Daten austauschen. Hierbei ist es bekannt, dass an ein Kraftfahrzeug Daten eines anderen Kraftfahrzeuges gesendet werden, wobei die Daten eine Warnmeldung enthalten.

Aus der DE 10 2005 055 208 A1 ist ein Verkehrswarnsystem zur Information über Gefahren auf Verkehrswegen bekannt, mit Einrichtungen in Fahrzeugen, welche automatisch, gestützt auf Sensoren, Warninformation erzeugen und ggf. über Sendeeinrichtungen an Empfängereinrichtungen in anderen Fahrzeugen übermitteln.

Aus der DE 10 2005 042 912 A1 ist eine Fahrerassistenzvorrichtung für ein Fahrzeug und ein Verfahren zur Sichtbarmachung der Umgebung eines Fahrzeugs bekannt.

Aus der EP 1 783 531 A1 ist eine Projektionsanzeige bekannt, bei der über eine Abbildungsoptik ein Bild auf eine Windschutzscheibe eines Fahrzeugs projiziert wird und wobei über die Abbildungsoptik eine Blickrichtung des Fahrers ermittelt wird.

Aus der WO 03/005102 A1 ist Head-Up Display System zur Darstellung eines Objekts eines Fahrzeugaußenraums bekannt mit Mitteln zur Erfassung einer Position eines Insassen des Fahrzeugs und Mitteln zur ortskorrekten Darstellung des Objekts in Bezug auf die Fahrerposition.

### Offenbarung der Erfindung

### Vorteile der Erfindung

Das erfindungsgemäße Verfahren mit den Merkmalen des unabhängigen Anspruchs hat demgegenüber den Vorteil, dass für einen Fahrer eines ersten Fahrzeuges ein Warnhinweis in Bezug auf eine Warnmeldung, welche von einem zweiten Fahrzeug an das erste Fahrzeug ausgesendet wurde, derart angezeigt wird, dass das zweite Fahrzeug in einem Head-Up-Display des ersten Fahrzeugs für den Fahrer des ersten Fahrzeugs visuell gekennzeichnet wird. Dieses ist insbesondere deshalb vorteilhaft, da dem Fahrer des ersten Fahrzeugs somit auf einfach wahrnehmbare Weise angezeigt wird, auf welches andere Fahrzeug sich ein Warnhinweis bezieht. Gemäß des erfindungsgemäßen Verfahrens überträgt das zweite Fahrzeug eine Warnmeldung und Positionsdaten bezüglich seiner Position an das erste Fahrzeug. Nach Empfangen der Warnmeldung und der Positionsdaten durch das erste Fahrzeug wird anhand der empfangenen Positionsdaten des zweiten Fahrzeugs darauf geschlossen, ob das zweite Fahrzeug in einem Bereich eines Head-Up-Displays des ersten Fahrzeugs für den Fahrer des ersten Fahrzeugs sichtbar ist. Ist dies der Fall, so wird der Warnhinweis durch Kennzeichnung des zweiten Fahrzeugs in dem Head-Up-Display bzw. in dem Bereich des Head-Up-Displays des ersten Fahrzeugs für den Fahrer des ersten Fahrzeugs visuell gekennzeichnet.

Durch die in den abhängigen Ansprüchen aufgeführten Maßnahmen sind vorteilhafte Weiterbildungen und Verbesserungen des in dem unabhängigen Anspruch angegebenen Verfahrens möglich.

Gemäß einer weiteren Ausführungsform der Erfindung wird zusätzlich zu den Positionsdaten anhand von Umfelderfassungsdaten einer Umfelderfassungseinheit des ersten Fahrzeugs darauf geschlossen, ob das zweite Fahrzeug in dem Bereich des Head-Up-Displays für den Fahrer des ersten Fahrzeugs sichtbar ist. Dieses hat den Vorteil, dass durch die zusätzliche Berücksichtigung der Umfelderfassungsdaten eine genauere bzw. sicherere Entscheidung darüber getroffen werden kann, ob und in welchem Bereich des Head-Up-Displays das zweite Fahrzeug für den Fahrer des ersten Fahrzeugs sichtbar ist.

Gemäß einer weiteren Ausführungsform der Erfindung wird ferner anhand von Bilddaten einer Bilderfassungseinheit des ersten Fahrzeuges auf die Blickrichtung des Fahrers des ersten Fahrzeuges geschlossen. Die Blickrichtung wird vorzugsweise als Eingangsgröße bzw. Berechnungsgröße dazu verwendet, um den Bereich des Head-Up-Displays zu bestimmen, in welchem das zweite Fahrzeug für den Fahrer des ersten Fahrzeugs visuell zu kennzeichnen ist. Dieses hat den Vorteil, dass in Abhängigkeit der sich möglicherweise ändernden Blickrichtung des Fahrers des ersten Fahrzeuges jener Bereich des Head-Up-Displays angepasst ausgewählt wird, in welchem das zweite Fahrzeug visuell gekennzeichnet wird.

Gemäß einer weiteren Ausführungsform der Erfindung wird die visuelle Kennzeichnung anhand einer Warnfarbe vorgenommen. Dieses hat den Vorteil, dass der Fahrer intuitiv auf einen Warnhinweis aufmerksam gemacht wird, da es für einen Fahrer naheliegend ist, mit einer Warnfarbe einen Warnhinweis zu assoziieren. Bei einer Warnfarbe handelt es sich um eine Farbe mit einem eingeschränkten Farbspektrum, welches vorzugsweise überwiegend Rotanteile aufweist. Als Warnfarben werden vorzugsweise Farben in jenem Bereich des Farbspektrums verwendet, welche als rot oder als orange zu klassifizieren sind.

Gemäß einer weiteren Ausführungsform der Erfindung enthält die Warnmeldung des zweiten Fahrzeugs Klassifizierungsdaten, anhand derer entschieden wird, ob der Warnhinweis dem Head-Up-Display des ersten Fahrzeuges anzuzeigen ist. Dieses ist deshalb vorteilhaft, da anhand der Klassifizierungsdaten auf einfache Weise zwischen solchen Warnmeldungen unterschieden werden kann, welche unmittelbar zur Ausgabe bzw. zur Anzeige eines Warnhinweises dem Head-Up-Displays führen sollen. Manche Warnmeldungen sind möglicherweise von hoher Wichtigkeit und sollen somit unmittelbar angezeigt werden. Andere Warnmeldungen sind möglicherweise von keiner hohen Wichtigkeit, so dass eine Anzeige eines Warnhinweises unterlassen werden kann.

Gemäß einer weiteren Ausführungsform der Erfindung enthält die Warnmeldung ferner eine Zeitinformation, anhand derer entschieden werden kann, ob der Warnhinweis in dem Head-Up-Display anzuzeigen ist. Dieses ist deshalb vorteilhaft, da anhand der Zeitinformation der Warnmeldung unterschiedliche empfangene Warnmeldungen, welche zu unterschiedlichen Zeitpunkten empfangen werden, festgestellt werden kann, ob eine Warnmeldung bereits einmal empfangen worden ist, oder ob es sich um eine neue, andere Warnmeldung handelt, welche zu einer Anzeige eines neuen, weiteren Warnhinweises führen soll. Hierzu weist die Warnmeldung vorzugsweise als Zeitinformation jenen Zeitpunkt auf, zu welchem die Warnmeldung durch das zweite Fahrzeug generiert wurde.

Gemäß einer weiteren Ausführungsform der Erfindung erfolgt die Anzeige des Warnhinweises durch eine zusätzliche Anzeige mindestens einer weiteren Warninformation in dem Head-Up-Display. Dieses ist vorteilhaft, da durch die weitere Warninformation dem Fahrer des ersten Fahrzeuges nicht nur angezeigt wird, von welchem Fahrzeug eine Warnmeldung ausgeht, sondern da somit auch genauere Informationen bezüglich der Warnmeldung bzw. des Warnhinweises dargestellt werden können.

Gemäß eines nebengeordneten Patentanspruchs wird ein Steuergerät zur Ausgabe eines Anzeigesignals für ein Head-Up-Display beansprucht, wobei das Steuergerät mittels unterschiedlicher Teilvorrichtungen des Steuergerätes die Verfahrensschritte des erfindungsgemäßen Verfahrens durchführt. Das erfindungsgemäße Steuergerät hat den Vorteil, dass aufgrund einer derartigen Anzeige eines Warnhinweises in dem Head-Up-Display, dass das zweite Fahrzeug in dem Head-Up-Display des ersten Fahrzeugs für den Fahrer des ersten Fahrzeuges visuell gekennzeichnet wird, das Steuergerät, das Head-Up-Display mittels eines Anzeigesignals über eine derartige Anzeige derart ansteuert, dass aufgrund der entsprechenden Anzeige des Warnhinweises der Fahrer des ersten Fahrzeuges auf einfache Weise auf das zweite Fahrzeug aufmerksam gemacht wird.

Gemäß einer weiteren Ausführungsform des erfindungsgemäßen Steuergerätes schließt eine Recheneinheit des Steuergerätes zusätzlich zu Positionsdaten des zweiten Fahrzeuges anhand von Umfelderfassungsdaten der Umfelderfassungseinheit darauf, ob das zweite Fahrzeug in einem Bereich des Head-Up-Displays für den Fahrer des ersten Fahrzeugs sichtbar ist. Dieses ist vorteilhaft, da durch Berücksichtigung von Umfelderfassungsdaten der Umfelderfassungseinheit die Recheneinheit eine Bestimmung des Bereichs des Head-Up-Displays, in welchem der Warnhinweis anzuzeigen ist, auf genauere Weise durchführen kann.

Gemäß einer weiteren Ausführungsform des erfindungsgemäßen Steuergerätes weist das Steuergerät eine Schnittstelle zu einer Bilderfassungseinheit auf, über welche die Recheneinheit des Steuergerätes Bilddaten erhält. Mittels der Bilddaten bestimmt die Recheneinheit in vorteilhafter Weise anhand der Blickrichtung, in welchem Bereich des Head-Up-Displays das zweite Fahrzeug visuell zu kennzeichnen ist. Dieses ist vorteilhaft, da durch eine zusätzliche Berücksichtigung der Blickrichtung des Fahrers eine mögliche Veränderung des Bereiches, in welchem das zweite Fahrzeug für den Fahrer sichtbar ist, ebenfalls berücksichtigt wird.

### Kurze Beschreibung der Zeichnung

Ausführungsbeispiele der Erfindung sind in den Zeichnungen dargestellt und in der nachfolgenden Beschreibung näher erläutert. Es zeigen
Figur 1 eine Verkehrssituation mit unterschiedlichen Fahrzeugen.
Figur 2 zeigt eine Kennzeichnung eines zweiten Fahrzeuges in einem Head-Up-Display eines ersten Fahrzeuges.
Figur 3 zeigt eine zusätzliche Ausgabe einer weiteren Warninformation in einem Head-Up-Display des ersten Fahrzeuges.
Figur 4 zeigt eine Ausführungsform eines erfindungsgemäßen Steuergerätes.

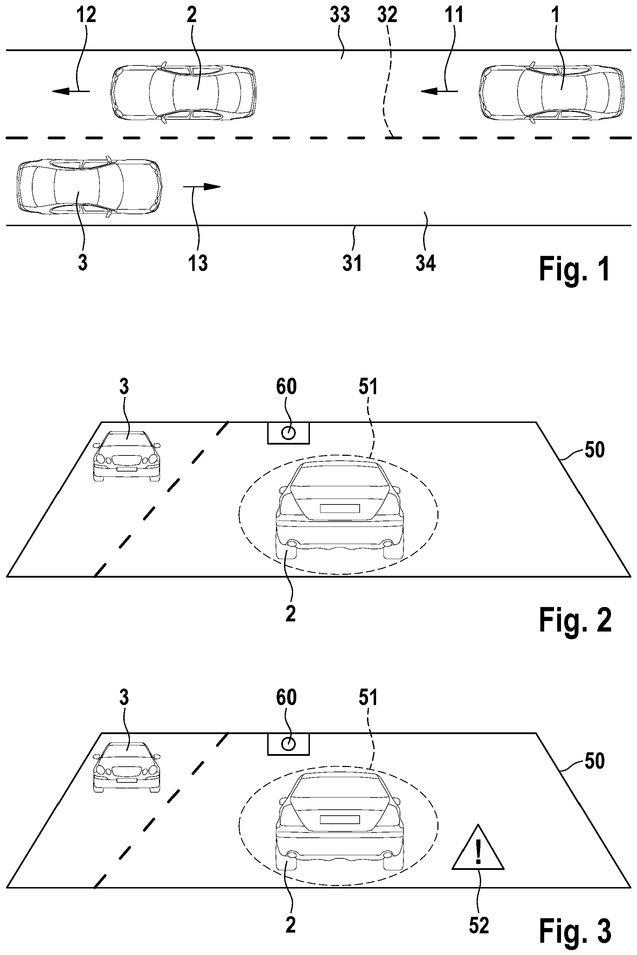

Figur 1 zeigt eine Verkehrssituation auf einer Straße 31, welche durch einen Mittelstreifen 32 in zwei Fahrbahnen 33, 34 aufgeteilt ist. Auf einer ersten Fahrbahn 33 befinden sich ein erstes Fahrzeug 1 sowie ein zweites Fahrzeug 2, wobei das erste Fahrzeug 1 eine erste Fahrtrichtung 11 aufweist, welche mit einer zweiten Fahrtrichtung 12 des zweiten Fahrzeugs 2 übereinstimmt. Auf einer zweiten Fahrbahn 34 befindet sich ein drittes Fahrzeug 3, welches eine dritte Fahrtrichtung 13 aufweist, welche der ersten Fahrtrichtung 11 und der zweiten Fahrtrichtung 12 entgegengesetzt ist. Es ist angenommen, dass das erste Fahrzeug 1 und das zweite Fahrzeug 2 jeweils über Kommunikationseinheiten verfügen, welche in Verbindung miteinander stehen, um Daten auszutauschen. Derartige Kommunikationseinheiten für sogenannte Car-to-Car-Systeme zur Übermittlung von Nachrichten von einem Fahrzeug an ein weiteres Fahrzeug etablieren beispielsweise Kommunikationsmöglichkeiten mittels sogenannter Add-Hoc-Netzwerke. Ergibt sich beispielsweise für das zweite Fahrzeug 2 bzw. für den Fahrer des zweiten Fahrzeugs 2 eine Verkehrssituation, welche eine Kritizität darstellt, so sendet die Kommunikationseinheit des zweiten Fahrzeuges 2 an die Kommunikationseinheit des ersten Fahrzeuges 1 eine Warnmeldung aus. Eine solche kritische Verkehrssituation kann für den Fahrer des zweiten Fahrzeugs 2 beispielsweise dann vorliegen, wenn er aufgrund von vor ihm befindlichen weiteren Verkehrsteilnehmern gezwungen ist, eine Bremsung vorzunehmen. Hierbei kann durch entsprechende Signale beispielsweise eines ABS (Antiblockiersystem) festgestellt werden, dass die durch die Bremsung herbeigeführte negative Beschleunigung des Fahrzeugs es für weitere, dem zweiten Fahrzeug folgende Kraftfahrzeuge von Vorteil sein kann, auf eine derartige Bremsung aufmerksam gemacht zu werden. Eine weitere kritische Verkehrssituation könnte beispielsweise dann vorliegen, wenn der Fahrer des zweiten Fahrzeugs zwei aufgrund einer vor ihm liegenden Verkehrssituation durch starke Lenkbewegungen eine Situation herbeiführt, in welcher das Fahrzeug ins Schleudern gerät. Ein solches Schleudern kann beispielsweise aufgrund von Signalen eines ESP-Systems (elektronisches Stabilitätsprogramm) detektiert werden und somit genutzt werden, darüber zu entscheiden, ob eine Warnung über die Kommunikationseinheit des zweiten Kraftfahrzeuges an weitere Kommunikationseinheiten weiterer Kraftfahrzeuge auszusenden ist.

Erfindungsgemäß ist vorgesehen, dass die Kommunikationseinheit des zweiten Fahrzeuges nicht nur eine Warnmeldung an die Kommunikationseinheit eines weiteren Fahrzeuges aussendet, sondern ebenfalls Positionsdaten bezüglich der Position des zweiten Fahrzeuges. Empfängt nun das erste Fahrzeug eine Warnmeldung sowie Positionsdaten des zweiten Fahrzeuges, so kann eine erfindungsgemäße Anzeige eines Warnhinweises erfolgen. Nach Empfangen der Warnmeldung und der Positionsdaten durch das erste Fahrzeug wird in dem ersten Fahrzeug zunächst darauf geschlossen, ob das zweite Fahrzeug in einem Bereich eines Head-Up-Displays des ersten Fahrzeuges für einen Fahrer des ersten Fahrzeuges sichtbar ist. Hierzu zeigt Figur 2 eine Frontscheibe 50 des ersten Fahrzeuges 1, durch welche der Fahrer beispielsweise das zweite Fahrzeug 2 sowie das dritte Fahrzeug 3 sieht. Ferner ist ebenso zu sehen, dass die Bereiche, in welchen sich die Fahrzeuge 2, 3 befinden, durch den Mittelstreifen 32 getrennt werden. Eine Einblendung von Informationen durch ein Head-Up-Display in eine Frontscheibe eines Kraftfahrzeuges erfolgt nun erfindungsgemäß derart, dass das zweite Fahrzeug 2 mittels einer visuellen Kennzeichnung 51, beispielsweise einer gestrichelten kreisförmigen Umrandung, für den Fahrer des ersten Fahrzeuges visuell gekennzeichnet wird. Die Unterscheidung, ob das zweite Fahrzeug 2 oder das dritte Fahrzeug 3 in dem Head-Up-Display bzw. in der Frontscheibe 50 für den Fahrer des ersten Fahrzeuges 1 visuell zu kennzeichnen ist, kann anhand der Positionsdaten des zweiten Fahrzeuges 2 erfolgen. Handelt es sich bei den Positionsdaten des zweiten Fahrzeuges 2 beispielsweise um Daten eines GPS-Systems, vorzugsweise eines differential global positioning systems (DGPS), so kann aufgrund der Positionsdaten des zweiten Fahrzeuges 2 darauf geschlossen werden, an welcher Position sich das zweite Fahrzeug 2 befindet, welches die Warnmeldung ausgesandt hat. Es kann somit darauf geschlossen werden, dass das zweite Fahrzeug 2 und nicht das dritte Fahrzeug 3 visuell zu kennzeichnen ist. Eine Übermittlung der Positionsdaten des zweiten Fahrzeuges 2 kann ferner nicht nur Positionsdaten enthalten, welche eine Position des zweiten Fahrzeuges 2 zu einem einzelnen Zeitpunkt wiedergeben, sondern ebenso Positionsdaten, welche mehrere Positionen des zweiten Fahrzeugs 2 zu unterschiedlichen Zeitpunkten beschreiben. Hierdurch kann auf eine Fahrtrichtung des zweiten Fahrzeuges 2 geschlossen werden. Ferner kann vorzugsweise mittels einer Positionsbestimmungseinheit in dem ersten Fahrzeug 1 auf Positionsdaten des ersten Fahrzeuges 1 zurückgegriffen werden, um vorzugsweise ebenso Positionsdaten des ersten Fahrzeuges 1 als auch eine Fahrtrichtung des ersten Fahrzeuges 1 zu erhalten und diese zur Bestimmung des Bereichs des Head-Up-Displays des ersten Fahrzeuges 1 zu verwenden, in welchem das zweite Fahrzeug 2 für den Fahrer des ersten Fahrzeuges 1 sichtbar und visuell zu kennzeichnen ist.

Vorzugsweise weist das erste Fahrzeug ferner eine Umfelderfassungseinheit auf. Zusätzlich zu den Positionsdaten des zweiten Fahrzeuges wird ferner anhand von Umfelderfassungsdaten der Umfelderfassungseinheit darauf geschlossen, dass das zweite Fahrzeug in dem Bereich des Head-Up-Displays des ersten Fahrzeuges für den Fahrer des ersten Fahrzeuges sichtbar ist. Bei der Umfelderfassungseinheit handelt es sich vorzugsweise hierbei um eine bildgebende Einheit, beispielsweise eine Kamera, so dass es sich bei den Umfelderfassungsdaten in einem solchen Fall beispielsweise um Bilddaten handelt. Durch eine zusätzliche Auswertung von Bilddaten kann vorzugsweise genauer darauf geschlossen werden, in welchem Bereich des Head-Up-Displays bzw. der Frontscheibe 50 das zweite Fahrzeug 2 für den Fahrer des ersten Fahrzeuges 1 sichtbar ist. Ferner kann es sich bei der Umfelderfassungseinheit um eine Radareinheit handeln, so dass es sich bei den Umfelderfassungsdaten um Radarsignale handelt. Ebenso sind Umfelderfassungseinheiten in Form von Ultraschallsensoren sowie Ultraschallsignalgebern denkbar, welche als Umfelderfassungsdaten Ultraschallsignale bereitstellen.

Vorzugsweise ist in dem ersten Fahrzeug eine Bilderfassungseinheit 60 vorhanden, wie in der Figur 2 dargestellt, bei welcher es sich beispielsweise um eine Kamera handelt. Eine solche Bilderfassungseinheit 60 stellt Bilddaten, vorzugsweise Videodaten, bereit, anhand derer auf die Blickrichtung des Fahrers des ersten Fahrzeuges 1 geschlossen wird. Vorzugsweise ist die Bilderfassungseinheit 60 in einem mittleren, oberen Bereich der Frontscheibe 50 positioniert, vorzugsweise oberhalb eines mittleren Rückspiegels. Eine Auswertung von Bilddaten, welche den Fahrer des ersten Fahrzeuges zeigen, ermöglicht es somit, auf die Blickrichtung des Fahrers des ersten Fahrzeuges zu schließen. Anhand der somit bestimmten Blickrichtung wird der Bereich des Head-Up-Displays bestimmt, in welchem das zweite Fahrzeug für den Fahrer visuell zu kennzeichnen ist, vorzugsweise durch eine Kennzeichnung 51. Eine solche visuelle Kennzeichnung 51 erfolgt vorzugsweise anhand einer Warnfarbe. Hierdurch wird der Fahrer auf einfache Weise auf das zweite Fahrzeug, welches die Warnmeldung aussendet, aufmerksam gemacht, so dass der Fahrer des ersten Fahrzeuges intuitiv seine Aufmerksamkeit auf das zweite Fahrzeug wenden kann, von welchem eine potentielle Gefahr ausgeht.

Vorzugsweise enthält die Warnmeldung des zweiten Fahrzeuges ferner eine weitere Warninformation. Hierzu zeigt Figur 3 alle in der Figur 2 dargestellten Objekte mit identischen Bezugszeichen sowie zusätzlich eine weitere Warninformation 52, welche beispielsweise ein Ausrufungszeichen in einem Dreieck ist. Diese weitere Warninformation 52 wird vorzugsweise alleine ohne die Kennzeichnung 51 oder zusätzlich zu der Kennzeichnung 51 des zweiten Fahrzeuges angezeigt, vorzugsweise neben der zweiten Kennzeichnung 51 bzw. neben des zu kennzeichnenden Fahrzeugs 2. Die weitere Warninformation kann eine Textinformation sein, ein Warnsymbol, ein Code, welchem eine Warninformation zugeordnet wird, oder eine Datenstruktur, welcher entnommen werden kann, welche Art von Warninformation zusätzlich angezeigt werden soll. Vorzugsweise überträgt das zweite Fahrzeug 2 mittels einer Kommunikationseinheit an das erste Fahrzeug 1 einen sogenannten Warncode, so dass in dem ersten Fahrzeug 1 anhand von einer Tabelle, einer Liste oder einer anderen Form von abgespeicherten Daten und mittels des Warncodes die weitere anzuzeigende Warninformation bestimmt wird.

Vorzugsweise enthält die Warnmeldung ferner Klassifizierungsdaten, anhand derer entschieden wird, ob der Warnhinweis in dem Head-Up-Display anzuzeigen ist. Sendet das zweite Fahrzeug 2 beispielsweise eine Warnmeldung bezüglich einer moderaten Bremstätigkeit des Fahrers des zweiten Fahrzeuges aus, so kann anhand von entsprechenden Klassifizierungsdaten in der Warnmeldung in dem ersten Fahrzeug entschieden werden, dass der Warnhinweis in Form einer Kennzeichnung 51 des zweiten Fahrzeuges 2 nicht auszugeben ist. Hierdurch wird vorteilhafter Weise vermieden, dass jede Form eines Warnhinweises in Form von Kennzeichnungen von Fahrzeugen bei jeder Form von Warnmeldung erfolgt, wodurch es zu einer Reizüberflutung kommen kann. Werden dem Fahrer des ersten Fahrzeuges 1 nur dann Warnhinweise in Form von Kennzeichnungen von anderen Fahrzeugen angezeigt, wenn die Warnmeldung aufgrund der Klassifizierungsdaten als wichtig klassifiziert wurde, so wird es hierdurch vermieden, dass durch eine Reizüberflutung des Fahrers des ersten Fahrzeuges durch zu häufige Warnhinweise in Form von Kennzeichnungen 51 der Fahrer diese Kennzeichnung 51 möglicherweise nicht mehr wahrnimmt.

Vorzugsweise enthält die Warnmeldung des zweiten Fahrzeuges ferner eine Zeitinformation, anhand derer entschieden wird, ob der Warnhinweis in dem Head-Up-Display anzuzeigen ist. Hierbei handelt es sich bei der Zeitinformation vorzugsweise um einen sogenannten Zeitstempel, welcher jenen Zeitpunkt angibt, zu welchem die Warnmeldung in dem zweiten Fahrzeug 2 generiert wurde. Erhält also eine Kommunikationseinheit des ersten Fahrzeuges 1 zu unterschiedlichen Zeitpunkten von der Kommunikationseinheit des zweiten Fahrzeuges 2 ein und dieselbe Warnmeldung mehrfach, beispielsweise aufgrund von Übertragungsstörungen bei einer Funkübertragung, so kann beispielsweise in dem ersten Fahrzeug 1 anhand der Zeitinformation in Form eines Zeitstempels entschieden werden, dass es sich bei der mehrfach empfangenen Warnmeldung um ein und dieselbe Warnmeldung handelt, so dass eine erneute Bestimmung des Bereiches, in welchem das zweite Fahrzeug 2 für den Fahrer in dem Headerdisplay sichtbar ist, nicht durchgeführt werden muss.

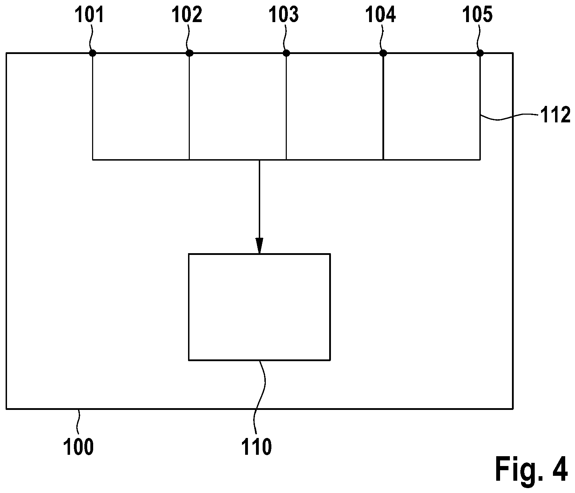

Die Figur 4 zeigt eine Ausführungsform des erfindungsgemäßen Steuergerätes. Das Steuergerät 1000 weist eine erste Schnittstelle 101 zum Empfangen einer Warnmeldung und Positionsdaten von einem zweiten Fahrzeug auf. Eine solche Schnittstelle ist beispielsweise eine Schnittstelle zur drahtlosen Datenübertragung, beispielsweise eine WLAN-Schnittstelle, oder eine Schnittstelle zu einer Empfangseinheit, welche sich außerhalb des Steuergerätes 100 befindet. Das erfindungsgemäße Steuergerät weist ferner eine zweite Schnittstelle 102 zur Ausgabe des Anzeigesignals für ein Head-Up-Display in einem ersten Fahrzeug auf. Mittels des Anzeigesignals wird in dem Head-Up-Display ein Warnhinweis an einen Fahrer des ersten Fahrzeuges angezeigt. Das erfindungsgemäße Steuergerät 100 ist dadurch gekennzeichnet, dass eine Recheneinheit 110 nach Empfangen der Warnmeldungen der Positionsdaten anhand der Positionsdaten des zweiten Fahrzeuges darauf schließt, ob das zweite Fahrzeug in einem Bereich des Head-Up-Displays des ersten Fahrzeuges 1 für den Fahrer des ersten Fahrzeuges 1 sichtbar ist. Die Recheneinheit 110 ist vorzugsweise über ein System zur Datenkommunikation 112, vorzugsweise ein Bussystem mit der ersten Schnittstelle 101 und der zweiten Schnittstelle 102 verbunden. Über ein derartiges Bussystem 112 ist die Kommunikation bzw. die Übertragung von unterschiedlichen Daten, Warnmeldungen, Positionsdaten sowie Anzeigesignale möglich. Schließt die Recheneinheit 110 darauf, dass das zweite Fahrzeug 2 in einem Bereich des Head-Up-Display des ersten Fahrzeugs 1 für den Fahrer des ersten Fahrzeugs sichtbar ist, so nimmt die Recheneinheit 110 mittels des auszugebenden Anzeigesignales eine derartige Anzeige des Warnhinweises in dem Head-Up-Display vor, dass das zweite Fahrzeug 2 in dem Head-Up-Display des ersten Fahrzeuges 1 für den Fahrer des ersten Fahrzeuges 1 visuell gekennzeichnet ist.

Vorzugsweise weist das Steuergerät 100 eine fünfte Schnittstelle 105 auf, über welche das Steuergerät 100 bzw. die Recheneinheit 110 Positionsdaten bezüglich einer Position des ersten Fahrzeuges empfängt. Bei derartigen Positionsdaten kann es sich beispielsweise um Daten eines GPS-Systems handeln.

Vorzugsweise weist das Steuergerät 100 eine dritte Schnittstelle 103 auf, über welche das Steuergerät 100 bzw. die Recheneinheit 110 Umfelderfassungsdaten von einer Umfelderfassungseinheit des ersten Fahrzeuges empfängt. Die Recheneinheit 100 schließt zusätzlich zu den Positionsdaten des zweiten Fahrzeuges anhand von den Umfelderfassungsdaten, beispielsweise Bilddaten, darauf, ob das zweite Fahrzeug 2 in einem Bereich des Head-Up-Displays des ersten Fahrzeuges 1 für den Fahrer des ersten Fahrzeuges 1 sichtbar ist.

Gemäß einer weiteren Ausführungsform weist das Steuergerät 100 eine vierte Schnittstelle 104 auf, über welche das Steuergerät 100 bzw. die Recheneinheit 110 Bilddaten von einer Bilderfassungseinheit des ersten Fahrzeuges erhält. Anhand der Bilddaten schließt die Recheneinheit 110 auf eine Blickrichtung des Fahrers des ersten Fahrzeuges 1. Ferner bestimmt die Recheneinheit 100 anhand der Blickrichtung den Bereich des Head-Up-Displays, in welchem das zweite Fahrzeug 2 für den Fahrer des ersten Fahrzeuges 1 visuell zu kennzeichnen ist.

## Patentansprüche

1. Verfahren zur Anzeige eines Warnhinweises in einem ersten Fahrzeug (1),
wobei ein zweites Fahrzeug (2) eine Warnmeldung und Positionsdaten bezüglich seiner Position an das erste Fahrzeug (1) überträgt, wobei nach Empfangen der Warnmeldung und der Positionsdaten durch das erste Fahrzeug (1) in dem Fall, dass anhand der empfangenen Positionsdaten darauf geschlossen wird, dass das zweite Fahrzeug (2) in einem Bereich eines Head-Up-Displays des ersten Fahrzeugs (1) für einen Fahrer des ersten Fahrzeugs (1) sichtbar ist, der Warnhinweis (51) derart angezeigt wird, dass das zweite Fahrzeug (2) in dem Head-Up-Display des ersten Fahrzeugs (1) für den Fahrer des ersten Fahrzeugs (1) visuell gekennzeichnet wird.

2. Verfahren nach Anspruch 1,
**dadurch gekennzeichnet, dass** zusätzlich zu den Positionsdaten Umfelderfassungsdaten einer Umfelderfassungseinheit des ersten Fahrzeugs (1) verwendet werden um darauf zu schließen, dass das zweite Fahrzeug (2) in dem Bereich des Head-Up-Displays des ersten Fahrzeugs (1) für den Fahrer des ersten Fahrzeugs (1) sichtbar ist.

3. Verfahren nach Anspruch 1 oder 2,
**dadurch gekennzeichnet, dass** ferner anhand von Bilddaten einer Bilderfassungseinheit (60) des ersten Fahrzeugs (1) auf die Blickrichtung des Fahrers des ersten Fahrzeugs (1) geschlossen wird,
und dass anhand der Blickrichtung der Bereich des Head-Up-Display bestimmt wird, in welchem das zweite Fahrzeug (2) für den Fahrer visuell gekennzeichnet wird.

4. Verfahren nach einem der vorhergehenden Ansprüche,
**dadurch gekennzeichnet, dass** die visuelle Kennzeichnung (51) anhand einer Warnfarbe erfolgt.

5. Verfahren nach einem der vorhergehenden Ansprüche,
**dadurch gekennzeichnet, dass** die Warnmeldung Klassifizierungsdaten enthält, anhand derer entschieden wird, ob der Warnhinweis (51) in dem Head-Up-Display anzuzeigen ist.

6. Verfahren nach einem der vorhergehenden Ansprüche,
**dadurch gekennzeichnet, dass** die Warnmeldung ferner eine Zeitinformation enthält, anhand derer entschieden wird, ob der Warnhinweis (51) in dem Head-Up-Display anzuzeigen ist.

7. Verfahren nach einem der vorhergehenden Ansprüche,
**dadurch gekennzeichnet, dass** die Anzeige des Warnhinweises (51) durch eine zusätzliche Anzeige mindestens einer weiteren Warninformation (52) in dem Head-Up-Display erfolgt.

8. Steuergerät (100) zur Ausgabe eines Anzeigesignals für ein Head-Up-Display in einem ersten Fahrzeug (1), wobei mittels des Anzeigesignal in dem Head-Up-Display ein Warnhinweis (51) an einen Fahrer des ersten Fahrzeugs (1) angezeigt wird, aufweisend
eine erste Schnittstelle (101) zum Empfangen einer Warnmeldung und Positionsdaten von einem zweiten Fahrzeug (2),
eine zweite Schnittstelle (102) zur Ausgabe des Anzeigesignal an das Head-Up-Display,
eine Recheneinheit (110), wobei die Recheneinheit (110) nach Empfangen der Warnmeldung und der Positionsdaten anhand der Positionsdaten darauf schließt, ob das zweite Fahrzeug (2) in einem Bereich des Head-Up-Displays des ersten Fahrzeugs (1) für den Fahrer des ersten Fahrzeugs (1) sichtbar ist,
und dass die Recheneinheit in dem Fall, dass das zweite Fahrzeug (2) in dem Bereich des Head-Up-Displays des ersten Fahrzeugs (1) für den Fahrer des ersten Fahrzeugs (1) sichtbar ist, mittels des auszugebenden Anzeigesignals eine derartige Anzeige des Warnhinweises (51) in dem Head-Up-Display vornimmt, dass das zweite Fahrzeug (2) in dem Head-Up-Display des ersten Fahrzeugs (1) für den Fahrer des ersten Fahrzeugs (1) visuell gekennzeichnet ist.

9. Steuergerät nach Anspruch 8,
**dadurch gekennzeichnet, dass** das Steuergerät (100) ferner eine dritte Schnittstelle (103) zu einer Umfelderfassungseinheit des ersten Fahrzeugs (103) aufweist, und dass die Recheneinheit (110) zusätzlich zu den Positionsdaten anhand von Umfelderfassungsdaten der Umfelderfassungseinheit darauf schließt, ob das zweite Fahrzeug in einem Bereich des Head-Up-Displays des ersten Fahrzeugs (1) für den Fahrer des ersten Fahrzeugs (1) sichtbar ist.

10. Steuergerät nach Anspruch 9,
**dadurch gekennzeichnet, dass** das Steuergerät (100) ferner eine vierte Schnittstelle (104) zu einer Bilderfassungseinheit (60) aufweist,
dass die Recheneinheit (110) anhand von Bilddaten der Bilderfassungseinheit (60) auf eine Blickrichtung des Fahrers schließt,
und dass die Recheneinheit (110) anhand der Blickrichtung bestimmt, in welchem Bereich des Head-Up-Displays das zweite Fahrzeug (2) für den Fahrer visuell gekennzeichnet wird.

## Claims

1. Method for displaying a warning message in a first vehicle (1), wherein a second vehicle (2) transmits a warning and position data relating to its position to the first vehicle (1),
wherein, if, after reception of the warning and of the position data by the first vehicle (1), it is concluded on the basis of the received position data that the second vehicle (2) can be seen by a driver of the first vehicle (1) in a region of a head-up display of the first vehicle (1), the warning message (51) is displayed in such a way that the second vehicle (2) is characterized visually for the driver of the first vehicle (1) in the head-up display of the first vehicle (1).

2. Method according to Claim 1,
**characterized in that**, in addition to the position data, surroundings-sensing data of a surroundings-sensing unit of the first vehicle (1) are used to conclude that the second vehicle (2) can be seen by the driver of the first vehicle (1) in the region of the head-up display of the first vehicle (1) .

3. Method according to Claim 1 or 2,
**characterized in that**, in addition, the viewing direction of the driver of the first vehicle (1) is inferred on the basis of image data of an image-sensing unit (60) of the first vehicle (1), and **in that** the region of the head-up display in which the second vehicle (2) is characterized visually for the driver is determined on the basis of the viewing direction.

4. Method according to one of the preceding claims, **characterized in that** the visual characterization (51) is effected on the basis of a warning color.

5. Method according to one of the preceding claims, **characterized in that** the warning contains classification data on the basis of which it is decided whether the warning message (51) is to be displayed in the head-up display.

6. Method according to one of the preceding claims, **characterized in that** the warning additionally contains a time information item on the basis of which it is decided whether the warning message (51) is to be displayed in the head-up display.

7. Method according to one of the preceding claims, **characterized in that** the warning message (51) is displayed in the head-up display by additionally displaying at least one further warning information item (52).

8. Control device (100) for outputting a display signal for a head-up display in a first vehicle (1), wherein a warning message (51) to a driver of the first vehicle (1) is displayed in the head-up display by means of the display signal, having a first interface (101) for receiving a warning signal and position data from a second vehicle (2),
a second interface (102) for outputting the display signal to the head-up display,
a computing unit (110),
wherein, after reception of the warning message and of the position data, the computing unit (110) concludes on the basis of the position data whether the second vehicle (2) can be seen by the driver of the first vehicle (1) in a region of the head-up display of the first vehicle (1),
and in that if the second vehicle (2) can be seen by the driver of the first vehicle (1) in the region of the head-up display of the first vehicle (1), the computing unit displays the warning message (51) by means of the display signal to be output in the head-up display in such a way that the second vehicle (2) is characterized visually for the driver of the first vehicle (1) in the head-up display of the first vehicle (1).

9. Control device according to Claim 8, **characterized in that** the control device (100) additionally has a third interface (103) to a surroundings-sensing unit of the first vehicle (103), and **in that**, in addition to the position data, the computing unit (110) concludes, on the basis of surroundings-sensing data of the surroundings-sensing unit, whether the second vehicle can be seen by the driver of the first vehicle (1) in a region of the head-up display of the first vehicle (1).

10. Control device according to Claim 9, **characterized in that** the control device (100) additionally has a fourth interface (104) to an image-sensing unit (60),
**in that** the computing unit (110) infers a viewing direction of the driver on the basis of image data of the image-sensing unit (60),
and **in that** the computing unit (110) determines, on the basis of the viewing direction, the region of the head-up display in which the second vehicle (2) is characterized visually for the driver.

## Revendications

1. Procédé d'affichage d'un message d'avertissement dans un premier véhicule (1), dans lequel un deuxième véhicule (2) transmet un message d'avertissement et des données de position concernant sa position au premier véhicule (1),
dans lequel, après réception du message d'avertissement et des données de position par le premier véhicule (1) dans le cas où il est déduit, sur la base des données de position reçues, que le deuxième véhicule (2) est visible par un conducteur du premier véhicule (1) dans une zone d'un affichage tête haute du premier véhicule (1), le message d'avertissement (51) est affiché de manière à ce que le deuxième véhicule (2) soit visuellement repéré sur l'affichage tête haute du premier véhicule (1) pour le conducteur du premier véhicule (1).

2. Procédé selon la revendication 1,
**caractérisé en ce que** des données de détection d'environnement d'une unité de détection d'environnement du premier véhicule (1) sont utilisées en plus des données de position pour déduire que le deuxième véhicule (2) est visible par le conducteur du premier véhicule (1) dans la zone de l'affichage tête haute du premier véhicule (1).

3. Procédé selon la revendication 1 ou 2, **caractérisé en ce que** la direction d'observation du conducteur du premier véhicule (1) est en outre déduite sur la base des données d'image d'une unité d'acquisition d'image (60) du premier véhicule (1),
et **en ce que** la zone de l'affichage tête haute dans laquelle le deuxième véhicule (2) est repéré visuellement pour le conducteur est déterminée sur la base de la direction d'observation.

4. Procédé selon l'une des revendications précédentes,
**caractérisé en ce que** le repérage visuel (51) est effectué sur la base d'une couleur d'avertissement.

5. Procédé selon l'une des revendications précédentes,
**caractérisé en ce que** le message d'avertissement contient des données de classification sur la base desquelles il est décidé si l'avertissement (51) doit être affiché sur l'affichage tête haute.

6. Procédé selon l'une des revendications précédentes,
**caractérisé en ce que** le message d'avertissement contient en outre une information de temps sur la base de laquelle il est décidé si l'avertissement (51) doit être affiché sur l'affichage tête haute.

7. Procédé selon l'une des revendications précédentes,
**caractérisé en ce que** l'avertissement (51) est indiqué par un affichage supplémentaire d'au moins une autre information d'avertissement (52) sur l'affichage tête haute.

8. Appareil de commande (100) destiné à délivrer un signal d'affichage pour un affichage tête haute dans un premier véhicule (1), dans lequel un avertissement (51) est présenté au conducteur sur l'affichage tête haute au moyen du signal d'affichage, comportant une première interface (101) destinée à recevoir un message d'avertissement et des données de position en provenance d'un deuxième véhicule (2),
une deuxième interface (102) destinée à délivrer le signal d'affichage à l'affichage tête haute,
une unité de calcul (110),
dans lequel l'unité de calcul (110), après avoir reçu le message d'avertissement et les données de position, utilise les données de position pour déterminer si le deuxième véhicule (2) est visible par le conducteur du premier véhicule (1) dans une zone de l'affichage tête haute du premier véhicule (1), et
dans lequel, dans le cas où le deuxième véhicule (2) est visible par le conducteur du premier véhicule (1) dans la zone de l'affichage tête haute du premier véhicule (1), l'unité de calcul effectue, au moyen du signal d'affichage devant être délivré, un affichage de l'avertissement (51) sur l'affichage tête haute tel que le deuxième véhicule (2) soit repéré visuellement sur l'affichage tête haute du premier véhicule (1) pour le conducteur du premier véhicule (1).

9. Appareil de commande selon la revendication 8, **caractérisé en ce que** l'appareil de commande (100) comprend en outre une troisième interface (103) avec une unité de détection d'environnement du premier véhicule (103), et **en ce que** l'unité de calcul (110) utilise les données de détection d'environnement de l'unité de détection d'environnement en plus des données de position pour déterminer si le deuxième véhicule est visible par le conducteur du premier véhicule (1) dans une zone de l'affichage tête haute du premier véhicule (1).

10. Appareil de commande selon la revendication 9, **caractérisé en ce que** l'appareil de commande (100) comprend en outre une quatrième interface (104) avec une unité d'acquisition d'images (60),
**en ce que** l'unité de calcul (110) déduit une direction d'observation du conducteur sur la base des données d'image de l'unité d'acquisition d'images (60),
et **en ce que** l'unité de calcul (110) détermine sur la base de la direction d'observation dans quelle zone de l'affichage tête haute le deuxième véhicule (2) est repéré visuellement pour le conducteur.
